# EUROPÄISCHE PATENTSCHRIFT

(11) **EP 1 886 892 B1**
(45) Veröffentlichungstag und Bekanntmachung des Hinweises auf die Patenterteilung: **31.03.2010**
(21) Anmeldenummer: 07113661.8
(22) Anmeldetag: 02.08.2007
(51) Int. Cl.: B61C 5/04

(54) **Schienenfahrzeug mit im Dach integrierter Abgasanlage**
Rail vehicle with an exhaust gas facility integrated in the roof
Véhicule sur rail doté d'une installation de gaz d'échappement intégrée dans le toit

(30) Priorität: 08.08.2006 DE 102006037072
(43) Veröffentlichungstag der Anmeldung: 13.02.2008
(73) Patentinhaber: SIEMENS AKTIENGESELLSCHAFT, 80333 München (DE)
(72) Erfinder: Willmore, Melvyn, 9270B, Laarne (BE)

(56) Entgegenhaltungen:
- WO-A-01/85516
- FR-A- 708 395
- GB-A- 455 260
- EGGERS D: "DIE LOKOMOTIVE G 2000 BB EINE INNOVATIVE DIESELHYDRAULISCHE STRECKENLOKOMOTIVE THE LOCOMOTIVE G2000BB AN INNOVATIVE DIESELHYDRAULIC MAIN-LINE LOCOMOTIVE" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 125, Nr. 5, Mai 2001 (2001-05), Seiten 173-182, XP001050817 ISSN: 0941-0589

## Beschreibung

Die Erfindung bezieht sich auf ein sich die Abgasanlage entlang eines Längsabschnittes des Schienenfahrzeugs über dessen gesamte Breite erstreckt und auf Dach-Längsträgern des Schienenfahrzeugs abgestützt ist.

Ein solches Schienenfahrzeug ist beispielsweise aus den Druckschriften GB 455 250A, WO 01/85516 A und FR 708 395 A bekannt. Dort wird jeweils eine Dachöffnung vorgesehen, in die eine Abgasanlage eingesetzt werden kann.

Schienenfahrzeuge werden typischer Weise mit Diesel als Brennstoff betrieben, wenn keine elektrifizierten Streckenabschnitte zur Verfügung stehen. In diesem Zusammenhang weist eine Lokomotive oder ein Triebzug einen Maschinenraum auf, in dem der Dieselmotor untergebracht ist. Dieser Motor steht in Verbindung mit einer zugehörigen Abgasanlage, welche zur Einhaltung geltender Emissionsschutzvorschriften ausgelegt ist.

Es ist bekannt, die Abgasanlage in einem sehr eingeschränkten Raum zwischen dem Dieselmotor und dem Schienenfahrzeugdach zu installieren. Derzeit eingesetzte Abgasanlagen müssen typischer Weise nicht instand gesetzt werden. Es ist jedoch zu erwarten, dass im Zuge einer Verschärfung der einzuhaltenden Abgasemissionsvorschriften aufwendiger ausgelegte Abgasanlagen zum Einsatz kommen werden, die insbesondere einen höheren Wartungsbedarf haben.

Ausgehend hiervon liegt der Erfindung die Aufgabe zugrunde, ein Schienenfahrzeug der eingangs genannten Art derart weiterzuentwickeln, dass die Abgasanlage für Wartungsarbeiten günstig angeordnet wird.

Diese Aufgabe wird bei dem Schienenfahrzeug der eingangs genannten Art dadurch gelöst, dass sich die Abgasanlage entlang eines Längsabschnittes des Schienenfahrzeugs über dessen gesamte Breite erstreckt und auf Dach-Längsträgern des Schienenfahrzeugs abgestützt ist.

Die Abgasanlage ist bevorzugt hinsichtlich der Formgebung ihrer Oberseite an angrenzende Oberflächenbereiche des Daches angepasst. In diesem Fall ergibt sich eine einheitliche Dachform auch in demjenigen Bereich des Daches, in den die Abgasanlage integriert ist.

Zur Erhöhung der Wartungsfreundlichkeit kann die Abgasanlage lösbar an angrenzenden Bereichen des Schienenfahrzeugs befestigt sein. Gängige Befestigungsmittel dafür sind dem Fachmann bekannt. Bevorzugt ist dabei die Art der Befestigung der Abgasanlage derart gewählt, dass sich die Abgasanlage nach oben aus dem Dach des Schienenfahrzeugs entfernen lässt. Auf diese Weise kann mit Hilfe einer geeigneten Hebevorrichtung die Abgasanlage aus dem Dach des Schienenfahrzeugs heraus gehoben und an einen Ort verbracht werden, an dem Wartungs-, Reinigungs- und/oder Instandsetzungsarbeiten durchgeführt werden können.

Die Abgasanlage erstreckt sich entlang eines Längsabschnitts des Schienenfahrzeugs über dessen gesamte Breite und ist auf Dach-Längsträgern des Schienenfahrzeugs abgestützt. In dieser Weise steht ein sehr erheblicher Raum zur Unterbringung der Abgasanlage innerhalb des Daches zur Verfügung, so dass auch komplex ausgestaltete Anlagen in das Dach einbaubar sind.

Die Abgasanlage kann bevorzugt als Abgasnachbehandlungssystem ausgebildet sein. Dies gestattet es, zukünftigen höheren Anforderungen an den Emissionsschutz bei brennstoffgetriebenen Schienenfahrzeugen genüge zu tun.

Dabei kann das Abgasnachbehandlungssystem beispielsweise eine Kombination eines Brennstoffpartikelfilters, insbesondere eines Dieselpartikelfilters (DPF), mit Elementen zur selektiven katalytischen Reduktion (SCR) aufweisen. Alternative technische Lösungen können ebenfalls zum Einsatz kommen. Bei einem kombinierten Abgasnachbehandlungssystem der Art mit Dieselpartikelfilter und selektiver katalytischer Reduktion für beispielsweise einen Dieseltriebzug oder eine Lokomotive wird ein Bauvolumen von etwa 4000 mm Länge, 2000 mm Breite und 750 mm Höhe benötigt, wobei das Gewicht ca. 2500 kg beträgt. Selbst solche großvolumigen Abgasnachbehandlungssysteme können in das Dach des Schienenfahrzeugs integriert werden.

Als weiterer Vorteil ergibt sich noch, dass in dem Fall, wenn die Abgasanlage nach oben aus dem Dach entnommen worden ist, ein besonders günstiger Zugang von oben auf den Dieselmotor und dessen Zubehör ermöglicht wird. Gerade bei größeren Instandsetzungen oder Überholungen ist dies hilfreich.

Die Anpassung der äußeren Formgebung der Abgasanlage an das Dach hat außerdem den Vorteil, dass ein überwiegender Anteil der Abgasanlagenoberfläche auftretende Wärme nach außerhalb des Schienenfahrzeugs und nicht in den Maschinenraum abführt. Auf diese Weise kann Kühlleistung für den Maschinenraum eingespart werden.

Für einen günstigen Zugriff in das Innere der Abgasanlage ist es vorteilhaft, wenn eine Oberseite der Abgasanlage wenigstens einen Zugang ins Innere der Abgasanlage aufweist. Dieser Zugang kann beispielsweise von einer äußeren und einer inneren Abdeckplatte gebildet werden.

Dabei kann der Zugang derart bemessen sein, dass sich Elemente der Abgasanlage durch den Zugang hindurch aus dem Innenraum der Abgasanlage entfernen lassen.

Bei dem kombinierten Abgasnachbehandlungssystem der oben beschriebenen Art können beispielsweise verbrauchte Katalysatoren durch diesen Zugang aus der Abgasanlage entnommen, instand gesetzt und wieder eingebaut werden.

Ausführungsbeispiele der Erfindung werden nachfolgend anhand der Zeichnungen noch näher beschrieben. Es zeigen:
- Figur 1: eine perspektivische Ansicht eines Schienenfahrzeugs mit in das Dach integrierter Abgasanlage,
- Figur 2: eine perspektivische Ansicht des Schienenfahrzeugs nach Figur 1 mit nach oben vom Schienenfahrzeug entfernter Abgasanlage,
- Figur 3: eine perspektivische Ansicht einer Abgasanlage mit nach oben entfernter Außenabdeckungsplatte,
- Figur 4: eine perspektivische Ansicht der Abgasanlage von Figur 3 mit zusätzlich entfernter innerer Abdeckungsplatte und
- Figur 5: eine perspektivische Ansicht der Abgasanlage nach Figur 3 und Figur 4 mit zusätzlich teilweise ausgebauten Katalysatoren.

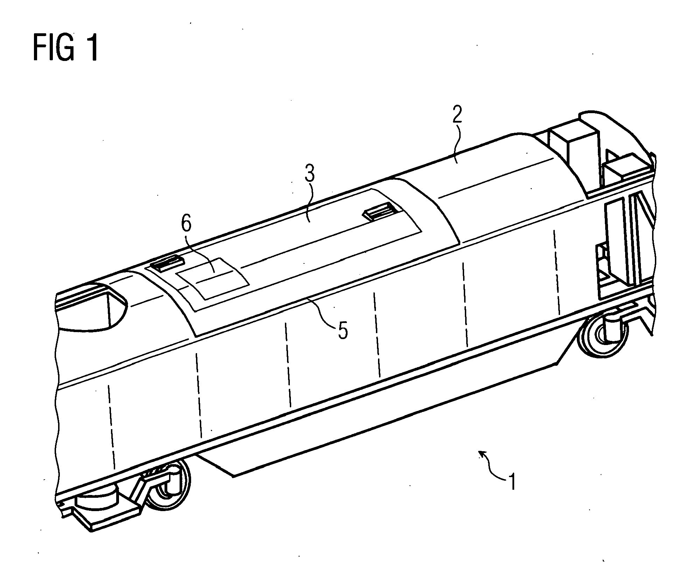

Figur 1 zeigt als Beispiel für ein dieselgetriebenes Schienenfahrzeug eine Diesellokomotive 1. Ein Dach 2 der Diesellokomotive 1 ist nicht, wie herkömmlicher Weise vorgesehen, durchgehend in Längsrichtung der Diesellokomotive 1 ausgebildet. Vielmehr weist das Dach 2 ein Dachelement auf, das von einer Abgasanlage 3 für einen Dieselmotor 4 gebildet wird. Die Abgasanlage 3 ist hinsichtlich der Formgebung ihrer Oberseite an angrenzende Oberflächenbereiche des Daches 2 angepasst, so dass der optische Gesamteindruck des Daches 2 im Wesentlichen demjenigen nach dem Stand der Technik entspricht.

Die Abgasanlage ist als Abgasnachbehandlungssystem ausgebildet und weist eine Kombination eines Brennstoffpartikelfilters und Elementen zur selektiven katalytischen Reduktion auf.

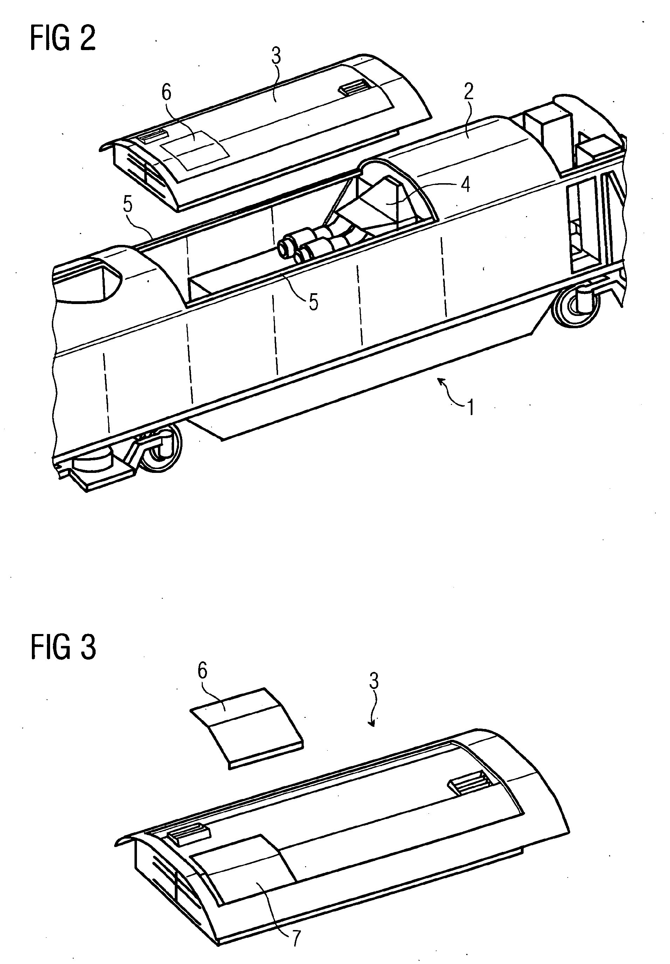

Die Abgasanlage 3 ist lösbar an einem Wagenkasten der Diesellokomotive 1 angebracht. Figur 2 zeigt die Diesellokomotive 1 mit nach oben von ihr entfernter Abgasanlage 3. Es ist ersichtlich, dass die Abgasanlage 3 sich über einen erheblichen Anteil an der Gesamtlänge der Diesellokomotive 1 erstreckt. Dies kann beispielsweise etwa ein Fünftel der Gesamtlänge der Diesellokomotive 1 sein. In Querrichtung der Diesellokomotive 1 erstreckt sich die Abgasanlage 3 über deren gesamte Breite und ruht auf Dach-Längsträgern 5.

An den Dach-Längsträgern 5 ist die Abgasanlage 3 lösbar befestigt. Geeignete Mittel dafür liegen im Belieben des Fachmanns.

Durch Herausheben der Abgasanlage 3 aus dem Dach 2 der Diesellokomotive 1 ergibt sich eine groß dimensionierte Dachöffnung, die insbesondere auch für Wartungsarbeiten an dem Dieselmotor 4 und seinem Zubehör genutzt werden kann.

Es ergibt sich, dass eine Mantelfläche der Abgasanlage 3 weit überwiegend von Flächenbereichen gebildet wird, die einen unmittelbaren Wärmeaustausch mit einer äußeren Umgebung haben können. Aufgrund dessen erfolgt eine erhebliche Wärmeabfuhr von der Abgasanlage 3 aus nach außen. Dies bedeutet wiederum, dass ein Wärmeeintrag in einen Maschinenraum der Diesellokomotive 1, in dem der Dieselmotor 4 untergebracht ist, gering ausfällt. Die Klimatisierungsanforderungen an den Maschinenraum sind daher gegenüber dem vergleichbaren Stand der Technik als eher gering anzusehen.

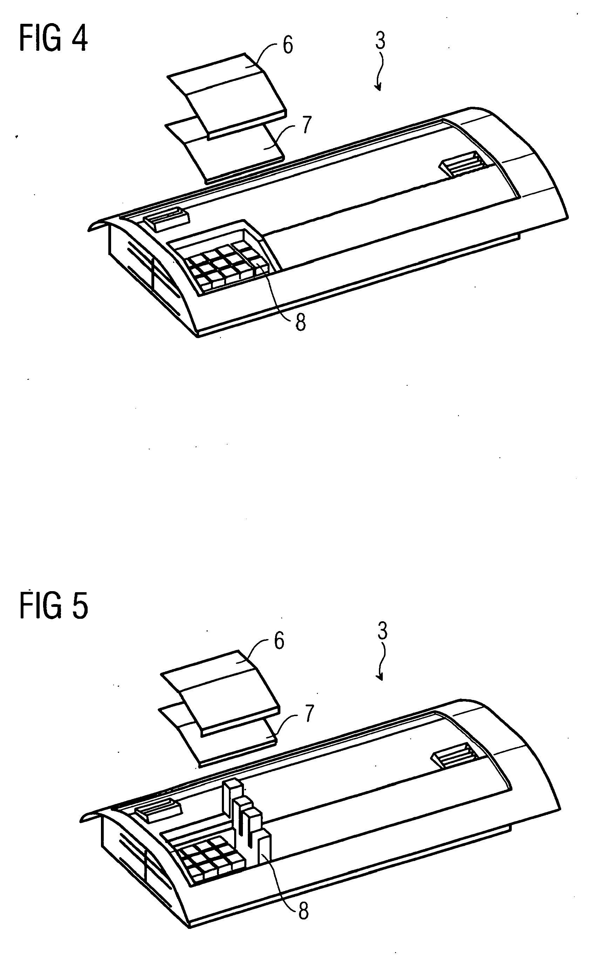

Die Figuren 3 und 4 zeigen die Abgasanlage 3 jeweils in einer Einzeldarstellung.

Sie zeigen in Zusammensicht, dass zum Ermöglichen eines Zugangs in das Innere der Abgasanlage 3 zunächst eine Außenabdeckungsplatte 6 und danach eine innere Abdeckungsplatte 7 entfernt werden können.

Der sich ergebende Zugang kann, wie Figur 5 veranschaulicht, zur Entnahme einzelner Katalysatoren 8 verwendet werden, von denen aus Gründen der Übersichtlichkeit nur einer mit einem Bezugszeichen bezeichnet ist.

Entnommene Katalysatoren 8 können von der Diesellokomotive 1 entfernt gewartet werden, wobei deren Reinigung erfolgen kann. Nicht mehr Instand zu setzende Katalysatorelemente können entsorgt und durch neue ersetzt werden.

Insofern kann auf die Oberseite der Abgasanlage 3 in einfacher Weise zugegriffen werden. Insgesamt ergibt sich eine einfache Wartung sowohl der Abgasanlage 3 insgesamt als auch im eingebauten Zustand darunter liegender Maschinenraumkomponenten, wie der Dieselmotor 4. Sobald zugehörige Anschlüsse zwischen dem Dieselmotor 4 und der Abgasanlage 3 im Inneren des Maschinenraums gelöst sind, und auch weitere Befestigungselemente zur Verbindung der Abgasanlage 3 mit dem Wagenkasten der Diesellokomotive 1 geöffnet sind, lässt sich die Abgasanlage 3 ohne weiteres von der Diesellokomotive 1 abheben. Gleichzeitig ist auch im Betrieb ein einfacher Zugang in das Innere der Abgasanlage 3 möglich.

## Patentansprüche

1. Brennstoffgetriebenes Schienenfahrzeug (1), mit in einem Maschinenraum angeordnetem Motor (4) und einer Abgasanlage (3) für den Motor (4),
wobei die Abgasanlage (3) in ein Dach (2) des Schienenfahrzeugs (1) integriert ist,
**dadurch gekennzeichnet, dass**
sich die Abgasanlage (3) entlang eines Längsabschnittes des Schienenfahrzeugs (1) über dessen gesamte Breite erstreckt und auf Dach-Längsträgern (5) des Schienenfahrzeugs (1) abgestützt ist.

2. Schienenfahrzeug (1) nach Anspruch 1,
**dadurch gekennzeichnet, dass**
die Abgasanlage (3) hinsichtlich der Formgebung ihrer Oberseite an angrenzende Oberflächenbereiche des Daches (2) angepasst ist.

3. Schienenfahrzeug (1) nach einem der Ansprüche 1 oder 2, **dadurch gekennzeichnet, dass**
die Abgasanlage (3) lösbar an angrenzenden Bereichen des Schienenfahrzeugs (1) befestigt ist.

4. Schienenfahrzeug (1) nach Anspruch 3,
**dadurch gekennzeichnet, dass**
die Art der Befestigung der Abgasanlage (3) derart gewählt ist, dass sich die Abgasanlage (3) nach oben aus dem Dach (2) des Schienenfahrzeugs (1) entfernen lässt.

5. Schienenfahrzeug (1) nach einem der Ansprüche 1 bis 4, **dadurch gekennzeichnet, dass**
die Abgasanlage (3) als Abgasnachbehandlungssystem ausgebildet ist.

6. Schienenfahrzeug (1) nach Anspruch 5,
**dadurch gekennzeichnet, dass**
das Abgasnachbehandlungssystem eine Kombination eines Brennstoffpartikelfilters und Elementen zur selektiven katalytischen Reduktion aufweist.

7. Schienenfahrzeug (1) nach einem der Ansprüche 1 bis 6, **dadurch gekennzeichnet, dass**
eine Oberseite der Abgasanlage (3) wenigstens einen Zugang ins Innere der Abgasanlage (3) aufweist.

8. Schienenfahrzeug (1) nach Anspruch 7,
**dadurch gekennzeichnet, dass**
der Zugang derart bemessen ist, dass sich Elemente der Abgasanlage (3) durch den Zugang hindurch aus dem Innenraum der Abgasanlage (3) entfernen lassen.

## Claims

1. Fuel-operated rail vehicle (1), having an engine (4), arranged in a machine cavity, and an exhaust system (3) for the engine (4),
wherein the exhaust system (3) is integrated into a roof (2) of the rail vehicle (1),
**characterized in that**
the exhaust system (3) extends along a longitudinal section of the rail vehicle (1), over the entire width thereof, and is supported on roof longitudinal members (5) of the rail vehicle (1).

2. Rail vehicle (1) according to Claim 1,
**characterized in that**
the exhaust system (3) is adapted, in terms of the shape of its upper side, to adjacent surface regions of the roof (2).

3. Rail vehicle (1) according to either of Claims 1 and 2, **characterized in that**
the exhaust system (3) is detachably fastened to adjacent regions of the rail vehicle (1).

4. Rail vehicle (1) according to Claim 3,
**characterized in that**
the method of fastening the exhaust system (3) is selected such that the exhaust system (3) can be removed upwardly from the roof (2) of the rail vehicle (1).

5. Rail vehicle (1) according to one of Claims 1 to 4, **characterized in that**
the exhaust system (3) is embodied as an exhaust gas post-treatment system.

6. Rail vehicle (1) according to Claim 5,
**characterized in that**
the exhaust gas post-treatment system has a combination of a fuel particle filter and elements for selective catalytic reduction.

7. Rail vehicle (1) according to one of Claims 1 to 6, **characterized in that**
an upper side of the exhaust system (3) has at least one access to the interior of the exhaust system (3).

8. Rail vehicle (1) according to Claim 7,
**characterized in that**
the access is dimensioned such that elements of the exhaust system (3) can be removed from the interior of the exhaust system (3) through the access.

## Revendications

1. Véhicule ( 1 ) ferroviaire entraîné par du carburant, comprenant un moteur ( 4) disposé dans une chambre de machine et une installation ( 3) de gaz d'échappement pour le moteur ( 4 ),
dans lequel l'installation ( 3 ) de gaz d'échappement est intégrée dans un toit ( 2 ) du véhicule ( 1 ) ferroviaire, **caractérisé en ce que**
l'installation ( 3 ) de gaz d'échappement s'étend le long d'une partie longitudinale du véhicule ( 1 ) ferroviaire sur toute sa largeur et s'appuie sur des longerons ( 5 ) du toit du véhicule ( 1 ) ferroviaire.

2. Véhicule ( 1 ) ferroviaire suivant la revendication 1,
**caractérisé en ce que**
la forme donnée au côté supérieur de l'installation ( 3 ) de gaz d'échappement est adaptée à des parties de surface voisines du toit ( 2 ).

3. Véhicule ( 1 ) ferroviaire suivant l'une des revendications 1 ou 2,
**caractérisé en ce que**
l'installation ( 3 ) de gaz d'échappement est fixée de manière amovible à des parties voisines du véhicule ( 1 ) ferroviaire.

4. Véhicule ( 1 ) ferroviaire suivant la revendication 3,
**caractérisé en ce que**
le type de fixation de l'installation ( 3 ) de gaz d'échappement est choisi de manière ce que l'installation ( 3 ) de gaz d'échappement puisse être retirée par le haut du toit ( 2 ) du véhicule ( 1 ) ferroviaire.

5. Véhicule ( 1 ) ferroviaire suivant l'une des revendications 1 à 4,
**caractérisé en ce que**
l'installation ( 3 ) de gaz d'échappement est constituée sous la forme d'un système de retraitement du gaz d'échappement.

6. Véhicule ( 1 ) ferroviaire suivant la revendication 5,
**caractérisé en ce que**
le système de retraitement du gaz d'échappement comporte une combinaison d'un filtre de particules de combustible et d'éléments de réduction catalytique sélective.

7. Véhicule ( 1 ) ferroviaire suivant l'une des revendications 1 à 6,
**caractérisé en ce que**
le côté supérieur de l'installation ( 3 ) de gaz d'échappement a au moins un accès à l'intérieur de l'installation ( 3 ) de gaz d'échappement.

8. Véhicule ( 1 ) ferroviaire suivant la revendication 7,
**caractérisé en ce que**
l'accès a des dimensions telles que des éléments de l'installation ( 3 ) de gaz d'échappement peuvent être retirés de l'espace intérieur de l'installation ( 3 ) de gaz d'échappement en passant par l'accès.
